# EUROPEAN PATENT SPECIFICATION

(11) **EP 2 732 659 B1**
(45) Date of publication and mention of the grant of the patent: **08.07.2015**
(21) Application number: 11799193.5
(22) Date of filing: 06.09.2011
(51) Int. Cl.: H04W 36/00

(54) **METHOD AND APPARATUS FOR TRANSFERRING TELECOMMUNICATIONS CONNECTIONS**
VERFAHREN UND VORRICHTUNG ZUR ÜBERTRAGUNG VON TELEKOMMUNIKATIONSVERBINDUNGEN
PROCÉDÉ ET APPAREIL POUR LE TRANSFERT DE CONNEXIONS DE TÉLÉCOMMUNICATIONS

(30) Priority: 11.07.2011 US 201113180195
(43) Date of publication of application: 21.05.2014
(73) Proprietor: Telefonaktiebolaget L M Ericsson (PUBL), 164 83 Stockholm (SE)
(72) Inventor: ANDRÉ-JÖNSSON, Henrik, SE-589 29 Linköping (SE); MELIN, Lena, SE-185 39 Vaxholm (SE); VOIGT, Lotta, SE-167 71 Bromma (SE); JOHANSSON, Stefan, SE-582 36 Linköping (SE)
(74) Representative: Ericsson
(86) International application number: PCT/SE2011/051076
(87) International publication number: WO 2013/009230

(56) References cited:
- US-A1- 2010 234 026
- US-A1- 2010 316 000
- ALCATEL-LUCENT ET AL: "Correction of CSFB", 3GPP DRAFT; R3-101145_CSFB, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. San Francisco, USA; 20100222, 1 March 2010 (2010-03-01), XP050424923, [retrieved on 2010-03-01]
- "3rd Generation Partnership Project; Technical Specification Group Radio Access Network; Radio Resource Control (RRC); Protocol specification (Release 10)", 3GPP STANDARD; 3GPP TS 25.331, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V10.1.0, 1 October 2010 (2010-10-01), pages 1-1806, XP050442402, [retrieved on 2010-10-01]
- NOKIA SIEMENS NETWORKS ET AL: "On the alternative selection for Single Radio VCC from LTE", 3GPP DRAFT; S2-071929, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Beijing; 20070418, 18 April 2007 (2007-04-18), XP050259666, [retrieved on 2007-04-18]
- ERICSSON: "Details on the RRC Connection Release procedure", 3GPP DRAFT; R2-080930(RRC CONNECTION RELEASE), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Sorrento, Italy; 20080205, 5 February 2008 (2008-02-05), XP050138733, [retrieved on 2008-02-05]
- NTT DOCOMO: "PS handover for emergency CS fallback", 3GPP DRAFT; S2-101579_PS HANDOVER FOR EMERGENCY CS FALLBACK, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. San Francisco, USA; 20100222, 24 February 2010 (2010-02-24), XP050434018, [retrieved on 2010-02-24]
- NOKIA SIEMENS NETWORKS ET AL: "UTRA CELL_DCH mobility to UTRA and EUTRA CSG cells", 3GPP DRAFT; R2-093836 UTRA HNB DISC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Los Angeles, USA; 20090623, 23 June 2009 (2009-06-23), XP050352050, [retrieved on 2009-06-23]

## Description

### TECHNICAL FIELD

This invention pertains to telecommunications, and particularly to method and apparatus for moving or transferring a connection involving a wireless terminal from a packet-based radio access network such as a Long Term Evolution (LTE) network to another network.

### BACKGROUND

In a typical cellular radio system, wireless terminals (also known as mobile stations and/or user equipment units (UEs)) communicate via a radio access network (RAN) to one or more core networks. The radio access network (RAN) covers a geographical area which is divided into cell areas, with each cell area being served by a base station node, e.g., a radio base station (RBS), which in some networks may also be called, for example, a "NodeB" (UMTS) or "eNodeB" (LTE). A cell is a geographical area where radio coverage is provided by the radio base station equipment at a base station site. Each cell is identified by an identity within the local radio area, which is broadcast in the cell. Another identity identifying the cell uniquely in the whole mobile network is also broadcasted in the cell. The base stations communicate over the air interface operating on radio frequencies with the user equipment units (UE) within range of the base stations.

In some versions of the radio access network, several base stations are typically connected (e.g., by landlines or microwave) to a controller node (such as a radio network controller (RNC) or a base station controller (BSC)) which supervises and coordinates various activities of the plural base stations connected thereto. The radio network controllers are typically connected to one or more core networks.

The Universal Mobile Telecommunications System (UMTS) is a third generation mobile communication system, which evolved from the second generation (2G) Global System for Mobile Communications (GSM). UTRAN is essentially a radio access network using wideband code division multiple access for user equipment units (UEs). In a forum known as the Third Generation Partnership Project (3GPP), telecommunications suppliers propose and agree upon standards for third generation networks and UTRAN specifically, and investigate enhanced data rate and radio capacity. Specifications for the Evolved Packet System (EPS) have completed within the 3^{rd} Generation Partnership Project (3GPP) and this work continues in the coming 3GPP releases. The EPS comprises the Evolved Universal Terrestrial Radio Access Network (E-UTRAN) (also known as the Long Term Evolution (LTE) radio access) and the Evolved Packet Core (EPC) (also known as System Architecture Evolution (SAE) core network). E-UTRAN/LTE is a variant of a 3GPP radio access technology wherein the radio base station nodes are directly connected to the EPC core network rather than to radio network controller (RNC) nodes. In general, in E-UTRAN/LTE the functions of a radio network controller (RNC) node are distributed between the radio base stations nodes (eNodeB's in LTE) and the core network. As such, the radio access network (RAN) of an EPS system has an essentially "flat" architecture comprising radio base station nodes without reporting to radio network controller (RNC) nodes.

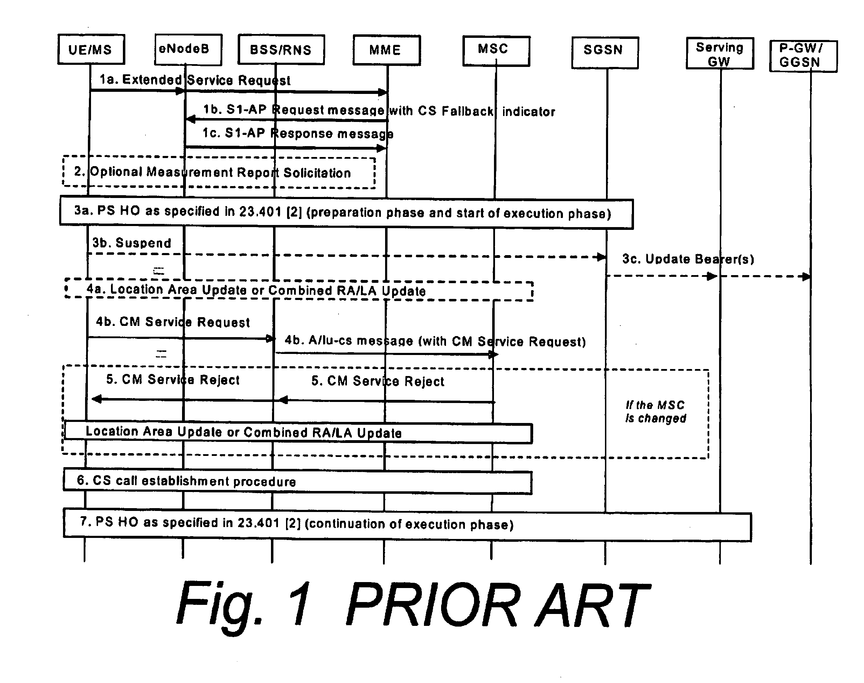

The Long Term Evolution (LTE) variant has thus been developed as a radio network for the transfer of data packets. In view of the packet orientation of LTE, many media streams cannot be transferred natively over LTE. Example media streams for which LTE is not suited include traditional circuit switched (CS) domain services, such as voice, unified display interface (UDI) video, and short message service (SMS). When LTE is not suitable for a transmission, e.g., a transmission of such media streams, a packet switched handover may occur from the LTE (from E-UTRAN to UTRAN). Fig. 1, taken from 3GPP 23.401, picture 5.5.2.1.3-1, shows execution of an Iu mode inter-radio access technology handover from an E-UTRAN network to UTRAN, wherein the UE finds its allocated resources in a target cell. In case the UE does not find its allocated resources in the target cell, the PSHO signaling sequence, is disrupted interrupted during step 4 of Fig. 1. A typical reason why this happens in legacy systems is that UE has moved outside the coverage area of the target cell during the time between radio measurements and handover execution.

Packet-oriented industry advancements and/or developments include technologies such as LTE, instant messaging service (IMS), and AllIP. LTE is an AllIP network which may be combined with IMS. IMS LTE may provide a voice service of its own, e.g., IMS VoIP, also called VoLTE. Until VoLTE is fully supported by termains and LTE networks, a way to provide traditional circuit switched voice is needed One example is a feature called Circuit-Switched (CS) Fallback which is invoked when a wireless terminal in an LTE network wishes to participate in a circuit-switched voice connection. Circuit-Switched (CS) Fallback is standardized and described, e.g., in 3GPP TS 23.272, V10.3.1 (2011-04), Circuit Switched (CS) Fallback in Evolved Packet System (EPS), which is incorporated herein by reference in its entirety.

CS Fallback (CSFB) allows an LTE device to fall back to the legacy WCDMA or GSM network if IMS voice over Internet protocol (VoIP) capabilities are not supported. CS Fallback for voice requires that the wireless terminal (UE) perform an Inter-radio-Access Technology (IRAT) transfer of its radio connections, from LTE RAN to UTRAN or GERAN, when the wireless terminal wants to setup a mobile-originating or mobile-terminating CS voice call.

Two different options for the actual transfer of radio connections from LTE to UTRAN/GERAN are specified in, e.g., 3GPP TS 23.272, V10.3.1 (2011-04), Circuit Switched (CS) Fallback in Evolved Packet System (EPS). As a first option, the base station node (eNB) may either trigger a Packet Switched handover (CS Fallback with PSHO) to UTRAN/GERAN. Alternatively, if packet switched handover (PSHO) is not supported or not preferred, the base station node (eNB) may trigger an RRC connection release with redirection to UTRAN/GERAN (CS Fallback with RWR).

The transfer to the CS-capable radio access technology (RAT) takes time to perform. The time to perform the transfer will be noticed by the end-users as a slow circuit switched (CS) voice call setup time. For circuit switched (CS) voice calls and emergency calls in particular, extra seconds in voice call setup time (compared to the time when the UE is already camping on a mobile network that supports voice services) will be conceived by the users as poor performance. But there are other characteristics also important for the end-user.

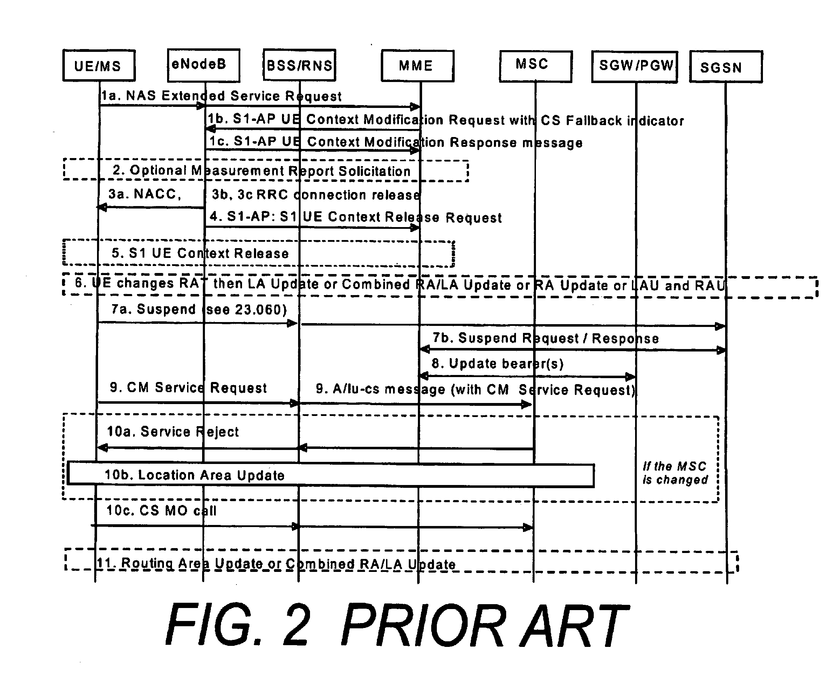

The first option of circuit switched fallback (CSFB) with Packet Switched handover (CS Fallback with PSHO supported) is illustrated by a diagram in 3GPP TS 23.272, V10.3.1 (2011-04), Circuit Switched (CS) Fallback in Evolved Packet System (EPS), which is essentially reproduced as Fig. 2. CS Fallback with PSHO has an advantage of a very short data interruption time for active packet switched (PS) data services. Radio measurements, in order to find the UTRAN/GERAN cell with the best coverage, can be accomplished by the wireless terminal (UE) when the wireless terminal is still connected in LTE. Resources are then prepared and reserved in the target UTRAN/GERAN cell before the wireless terminal is told to change to another radio access technology. As soon as the wireless terminal is connected in UTRAN/GERAN, the wireless terminal may initiate the circuit switched (CS) voice setup. The end-to-end circuit switched (CS) voice setup time is thus very short. The CS voice setup time becomes even shorter if the PSHO is performed without prior measurements on UTRAN/ GERAN coverage.

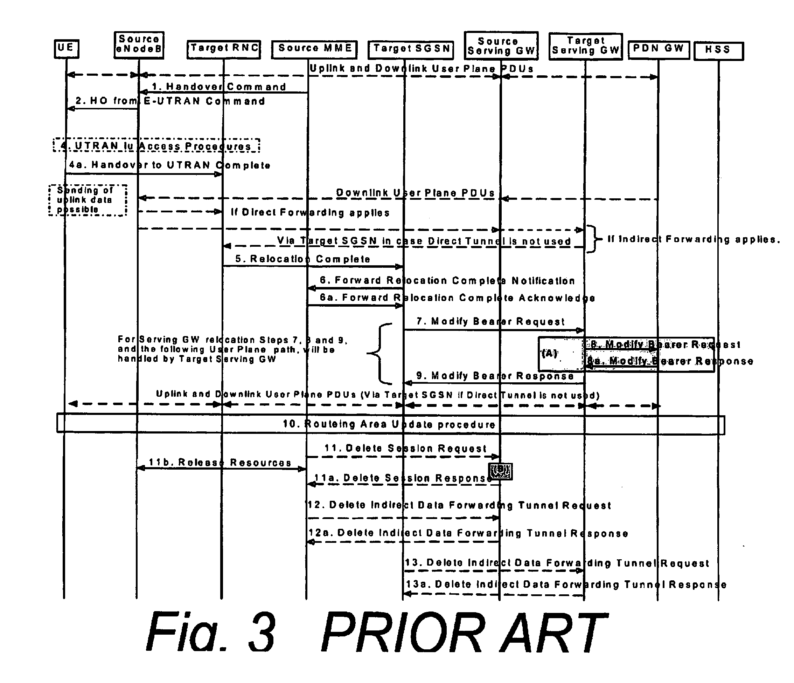

The second option of RRC connection release with redirection to UTRAN/GERAN (CS Fallback with RWR) is illustrated by a diagram in 3GPP TS 23.272, V10.3.1 (2011-04), Circuit Switched (CS) Fallback in Evolved Packet System (EPS), which is essentially reproduced as Fig. 3. CS Fallback with RWR has the advantage of being a very robust solution. When the wireless terminal is redirected to UTRAN/GERAN, all ongoing packet switched (PS) data transfers in LTE are released. The wireless terminal is given information on one frequency/frequency group to use for searching for a new cell. A first example drawback with the CS Fallback with RWR is that all PS bearers are released. Not until the PS bearers are re-established in UTRAN/GERAN may the data transfers continue. The packet switched (PS) outage time is thus long. A second example drawback is a slightly longer circuit switched (CS) voice call setup time (compared to CS Fallback with PSHO).

Enhancements of the CS Fallback with RRC connection release with redirection (Enhanced CS Fallback RWR) are standardized in 3GPP Release 9. The enhancement mechanism is intended to optimize service characteristics, mainly the CS voice setup time. By letting the base station node (eNB) provide system information of the UTRAN/GERAN target cell/cells to the wireless terminal when the base station node releases the radio bearers and redirects the UE to the other radio access technology (RAT), the wireless terminal does not need to spend time reading all system information before initiating its radio connection in UTRAN/GERAN, thus reducing the voice setup times. This system information needs to be provided and synchronized between the different radio access technologies.

According to conventional CS fallback practice, if an inter-RAT handover does not succeed, the wireless terminal returns to the source RAT and resumes the connection used before the handover execution. See, e.g., section 8.3.6.5 of 3GPP TS 25.331, Vol. 10.3.1 (2011-04), Radio Resource Control (RRC); Protocol specification (UTRAN), and section 5.4.3.1 of 3GPP TS 36.331 V10.1.1 (2011-03), Radio Resource Control (RRC), Protocol specification (E-UTRAN).

When CSFB with PSHO is used, the normal inter-RAT handover behavior is applied also for the unsuccessful case. That is, if the wireless terminal does not succeed in establishing the connection to the selected Target Cell, the wireless terminal returns to the source RAT and resumes the connection used before the handover.

For a normal inter-RAT handover the "turn-back to source" behavior may save some connections. For CS Fallback, if the UE returns to LTE without having succeeded in setting up the CS voice call in the target RAT, the entire CS Fallback has failed, as specified in 3GPP TS 23.272, V10.3.1 (2011-04), Circuit Switched (CS) Fallback in Evolved Packet System (EPS). In other words, for CS Fallback, if the PSHO attempts fails, the UE returns to the LTE network without having succeeded in setting up the connection in the target RAT and the entire CS Fallback procedure has failed.

When a target cell in the target RAT has been selected, the wireless terminal is still in LTE. However, during the ongoing IRAT handover there is always a risk that the wireless terminal may be moving outside or away from the coverage of the target cell. In this case the handover fails. This is a particularly unwanted behavior for the CS Fallback triggered PSHO since end users, and operators, expect very high call success rates for speech calls.

3GPP Tdoc R2-080930 describes details of the Radio Resource Control (RRC) release procedure and discloses that redirection upon RRC connection release to a certain carrier frequency or RAT should be possible. This paper also describes that a UE cannot initiate a release of an RRC connection, except when the UE is not able to re-establish the RRC connection after handover failure and radio link failure, a then enters idle mode autonomously without using the RRC Connection Release procedure. The RRC CONNECTION RELEASE message triggers certain layers in the UE to request establishment of a new signalling connection, after entering idle mode and applying any received direction information.

3GPP R3-101145 describes some scenarios of CS fallback with PS handover that can lead to significant delay. A solution to avoid or optimize this problem is proposed whereby the target RNC Is made aware that the incoming PS handover is for CSFB or Emergency CSFB.

US 2010/0234026 A1 describes methods, apparatus and computer program products to facilitate the acquisition of radio recourses when an initial redirect attempt to acquire the necessary resources falls. When acquisition of the service falls, a preferential search of additional radio resources Is conducted to acquire the service. The disclosed concepts are applicable to a variety of technologies, such as UMTS, and LTE.

3GPP TS 25.331 V10.1.0 describes how reception of a HANDOVER FROM UTRAN FAILURE message by UTRAN, UTRAN may begin to release the resources in the target RAT.

3GPP S2-071929 discusses alternatives for voice call continuity from LTE, including Call re-establishment, PS(LTE) to PS(pre-LTE) handover and PS(LTE) to CS(pre-LTE) handover.

3GPP R2-093836 discusses UTRA CELL_DCH mobility to UTRA and EUTRA CSG cells. The paper proposes that in case of radio link failure detection during handover evaluation of a CSG/hybrid cell, the UE not wait for expiration of T313 or perform cell selection. Rather, the UE should read system information of the target CSG cell and immediately perform Cell Update (or RRC reestablishment request) if access is allowed.

Embodiments of the invention are defined by the companying claims 1-16.

### SUMMARY

A wireless terminal is provided which comprises a radio unit through which the wireless terminal selectively communicates across a radio interface with a base station of a Long Term Evolution, LTE, radio access network and with another radio access network and through which the wireless terminal receives a handover command message from the LTE radio access network. The another radio access network comprises a radio access technology other than LTE. The handover command message includes an indicated cell and an alternative transfer authorization. The alternative transfer authorization instructs the wireless terminal to perform a second type of transfer procedure should a first type of transfer procedure not be successful. The wireless terminal comprises a mobility unit configured, upon receipt of the handover command message:
(1) to at least attempt to perform the first type of transfer, wherein the first type of transfer is a handover of a connection involving the wireless terminal from the LTE radio access network to the indicated cell in the another radio access network; and, if the handover does not succeed within a predetermined time and in response to the alternative transfer authorization,
(2) to perform the second type of transfer, wherein the second type of transfer is a release of the connection and re-establishment of the connection in a selected cell of the another radio access network instead of returning the wireless terminal to the LTE radio access network and thereby improve success of transfer of the wireless terminal.

A method of improving success of transfer of a wireless terminal is also provided. In this method, the wireless terminal receives a handover command message from a Long Term Evolution, LTE, radio access network. The handover command message includes an indicated cell and an alternative transfer authorization, and the alternative transfer authorization instructs the wireless terminal to perform a second type of transfer procedure should a first type of transfer procedure not be successful.

In response to the handover command message, the wireless terminal at least attempts to perform the first type of transfer, wherein the first type of transfer is a handover of a radio connection involving the wireless terminal from the LTE radio access network to the indicated cell in another radio access network, the another radio access network comprising a radio access technology other than LTE. Then, when the handover does not succeed within a predetermined time and in response to the alternative transfer authorization, the wireless terminal performs the second type of transfer, wherein the second type of transfer is releasing the connection and re-establishing the connection in a selected cell of the another radio access network instead of returning the wireless terminal to the LTE radio access network.

A node of a Long Term Evolution, LTE, radio access network is also provided. The node comprises an interface configured for radio communication with a wireless terminal. The node further comprises a handover unit configured to send a handover command message to the wireless terminal. The handover command message includes an indicated cell and an alternative transfer authorization instructing the wireless terminal to perform a multiple transfer attempt procedure. The multiple transfer attempt procedure requires the wireless terminal:
(1) to at least attempt to perform a first type of transfer, wherein the first type of transfer is a handover of a connection involving the wireless terminal from the LTE radio access network to the indicated cell in another radio access network, the another radio access network comprising a radio access technology other than LTE; and, if the handover does not succeed within a predetermined time and in response to the alternative transfer authorization,
(2) perform a second type of transfer, wherein the second type of transfer is a release of the connection and re-establishment of the connection in a selected cell of the another radio access network instead of returning the wireless terminal to the LTE radio access network.

Embodiments of the invention are defined by the accompanying claims 1-16.

### BRIEF DESCRIPTION OF THE DRAWINGS

The foregoing and other objects, features, and advantages of the invention will be apparent from the following more particular description of preferred embodiments as illustrated in the accompanying drawings in which reference characters refer to the same parts throughout the various views. The drawings are not necessarily to scale, emphasis instead being placed upon illustrating the principles of the invention.
Fig. 1 is a diagrammatic view showing execution of an Iu mode inter-radio access technology handover from an E-UTRAN network to a UTRAN Iu mode.
Fig. 2 is a diagrammatic view of circuit switched fallback (CSFB) with Packet Switched handover as essentially reproduced from 3GPP TS 23.272, V10.3.1 (2011-04).
Fig. 3 is a diagrammatic view of RRC connection release redirection as essentially reproduced from 3GPP TS 23.272, V10.3.1 (2011-04).
Fig. 4 is schematic view of a communications system comprising a Long Term Evolution (LTE) radio access network which communicates with a evolved packet core network (EPC) and another radio access network comprising a radio access technology other than LTE which communicates with both a packet-switched core network and a circuit-switched core network, and a wireless terminal which can be moved between the LTE radio access network and the other radio access network.
Fig. 5 is a schematic view showing portions of the communications system of Fig. 4 including portions of the base station nodes of the LTE radio access network and the other radio access network of portions of the wireless terminal.
Fig. 6 is a flowchart showing example, representative acts or steps performed in conjunction with an example embodiment and mode of operating a wireless terminal.
Fig. 6A is a flowchart showing more example details of an of Fig. 6.
Fig. 7 is a diagrammatic view showing example messages and/or signals which, in an example embodiment and mode, comprise the method of Fig. 6.
Fig. 7A is a diagrammatic view showing example messages and/or signals which, in another example embodiment and mode, comprise the method of Fig. 6.
Fig. 8 is a diagrammatic view showing example acts in a more detailed example embodiment and mode of the second try transfer procedure of Fig. 6 in the context of figures such as those of 3GPP standards.
Fig. 9 is a diagrammatic view showing an example handover command message in the form of an enhanced or augmented *MobilityFromEUTRACommand.*
Fig. 10 is a schematic view showing more structural detail for certain example machine-implemented embodiments of a wireless terminal.
Fig. 11 is a diagrammatic view showing basic acts or steps comprising a method of the wireless terminal accessing a target network.

### DETAILED DESCRIPTION

In the following description, for purposes of explanation and not limitation, specific details are set forth such as particular architectures, interfaces, techniques, etc. in order to provide a thorough understanding of the present invention. However, it will be apparent to those skilled in the art that the present invention may be practiced in other embodiments that depart from these specific details. In some instances, detailed descriptions of well-known devices, circuits, and methods are omitted so as not to obscure the description of the present invention with unnecessary detail.

Thus, for example, it will be appreciated by those skilled in the art that block diagrams herein can represent conceptual views of illustrative circuitry or other functional units embodying the principles of the technology. Similarly, it will be appreciated that any flow charts, state transition diagrams, pseudocode, and the like represent various processes which may be substantially represented in computer readable medium and so executed by a computer or processor, whether or not such computer or processor is explicitly shown.

The functions of the various elements including functional blocks, including but not limited to those labeled or described as "computer", "processor" or "controller", may be provided through the use of hardware such as circuit hardware and/or hardware capable of executing software in the form of coded instructions stored on computer readable medium. Thus, such functions and illustrated functional blocks are to be understood as being either hardware-implemented and/or computer-implemented, and thus machine-implemented.

In terms of hardware implementation, the functional blocks may include or encompass, without limitation, digital signal processor (DSP) hardware, reduced instruction set processor, hardware (e.g., digital or analog) circuitry including but not limited to application specific integrated circuit(s) [ASIC], and (where appropriate) state machines capable of performing such functions.

In terms of computer implementation, a computer is generally understood to comprise one or more processors or one or more controllers, and the terms computer and processor and controller may be employed interchangeably herein. When provided by a computer or processor or controller, the functions may be provided by a single dedicated computer or processor or controller, by a single shared computer or processor or controller, or by a plurality of individual computers or processors or controllers, some of which may be shared or distributed. Moreover, use of the term "processor" or "controller" shall also be construed to refer to other hardware capable of performing such functions and/or executing software, such as the example hardware recited above.

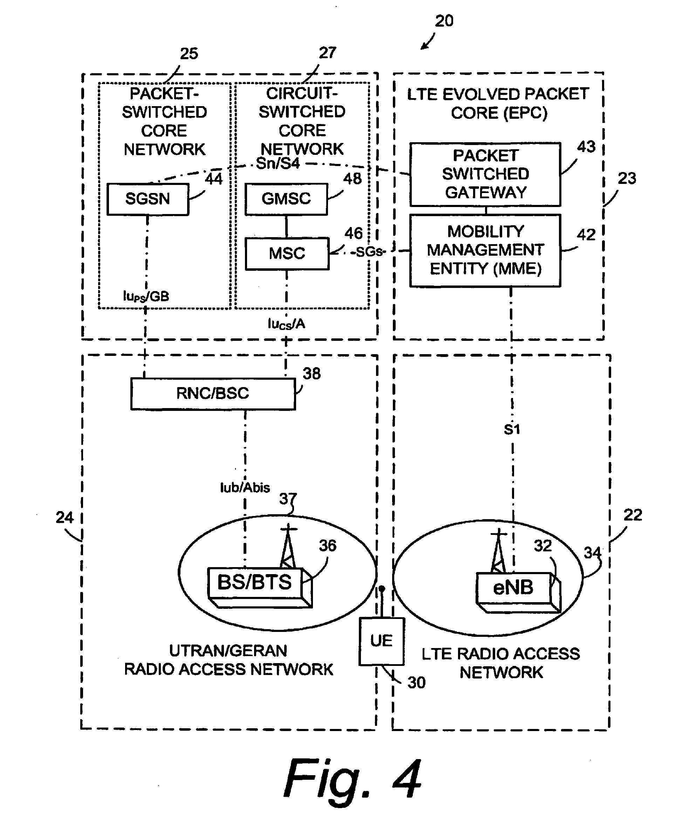

Fig. 4 is schematic view of a communications system 20 suitable for illustrating aspects of the technology disclosed herein, including but not limited to a multi-procedure transfer technique which authorizes and implements a second type of transfer procedure for transferring a wireless terminal from a first type of radio access network to a second type of radio access network when a first type of transfer procedure fails.

The communications system 20 comprises a Long Term Evolution (LTE) radio access network 22 which communicates with evolved packet core network (EPC) 23 and another radio access network 24 which communicates with both packet-switched core network 25 and circuit-switched core network 27. The another (e.g., "other") radio access network 24 comprises a radio access technology other than LTE. In the particular example embodiment of Fig. 4 the other radio access network is a UTRAN/GERAN radio access network. Fig. 4 also illustrates wireless terminal 30 which is of a type that can be moved between the LTE radio access network 22 and the other or non-LTE radio access network 24.

Fig. 4 further shows various nodes as well as various interfaces over which the networks illustrated in Fig. 4 communicate with one another. In this regard, Fig. 4 shows the LTE radio access network 22 as comprising at least one eNodeB 32 or eNB, which serves as a base station node for the LTE radio access network 22. The eNodeB 32 is depicted as serving cell 34. It will be appreciated that the LTE network 22 typically includes numerous eNodeBs and that only one eNodeB 32 is now illustrated for sake of simplicity.

Fig. 4 shows non-LTE radio access network 24 as comprising base station (BS or BTS) 36 which serves cell 37. Again for sake of simplicity only one representative base station 36 is shown, although the non-LTE radio access network 24 typically includes numerous such base station nodes. In the non-LTE radio access network 24 one or more base stations 36 may be controlled by a higher level node, such as a radio network controller (RNC) or base station controller (BSC), generically illustrated as RNC/BSC 38. In the case of the RNC/BSC 38 being a radio network controller (RNC), the base station 36 is connected to the RNC over an interface known as the Iub interface. In the case of the RNC/BSC 38 being a base station controller (BSC) node, the base station 36 is connected to the BSC over an interface known as the Abis interface.

Fig. 4 shows evolved packet core network (EPC) 23 as comprising mobility management entity (MME) 42 and packet switched gateway 43. The mobility management entity (MME) 42 is connected to eNodeB 32 over an interface known as the S1 interface.

Fig. 4 further shows the packet-switched core network 25 as comprising Serving General Radio Packet Service (GPRS) Support (SGSN) node 44. In the case of the RNC/BSC 38 being a radio network controller (RNC), the RNC 38 is connected to the SGSN 44 over an interface known as the Iuₚₛ interface. In the case of the RNC/BSC 38 being a base station controller (BSC) node, the BSC 38 is connected to the SGSN 44 over an interface known as the GB interface.

Fig. 4 also shows circuit-switched core network 27 as comprising mobile switching center (MSC) 46 and gateway mobile switching center (GMSC) 48. The mobility management entity (MME) 42 of the circuit-switched core network 27 is connected to the MSC 46 of the circuit-switched core network 27 over an interface known as the SGs interface. The packet switched gateway 43 is connected to the GMSC 48 over an interface known as the Sn/S4 interface.

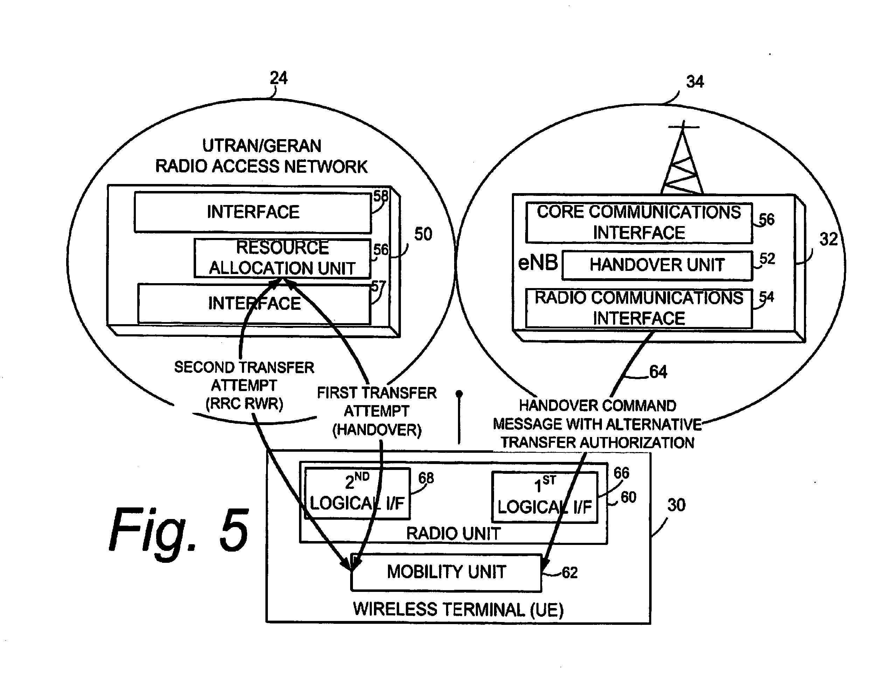

Fig. 5 shows portions of the communications system of Fig. 4 including selected functionalities or units of the base station node (eNodeB) 32 of the LTE radio access network 22; selected functionalities or units of a node 50 of the other radio access network 24; and selected functionalities or units of the wireless terminal 30. The node 50 of the other radio access network 24 is shown generically since, depending on type of radio access network, the node of the other radio access network 24 which performs the functions described herein may be either a base station node such as base station 36 or a higher level node such as RNC/BSC 38. The selected functionalities or units shown in Fig. 5 and described herein are only those pertinent to the technology disclosed herein. As will be understood by the person skilled in the art, nodes 32, 50, and wireless terminal 30 include many other functionalities and/or units. As used herein, the word "unit" when used to describe a functionality does not necessarily mean that the functionality is performed by a single or centralized structure (e.g., node, circuit board, processor), since the structure which performs the functionality may reside or be distributed at several structures (e.g., spread over plural nodes, circuit boards, or processors, etc.).

The eNodeB 32 is illustrated as comprising handover unit 52; radio communications interface 53; and core network interface 54. The radio communications interface 53 comprises one or more transmitter units, one or more receiver units, and one or more antenna which enable radio communication over the air interface with wireless terminal 30. The core network interface 54 connects over the S1 interface to the mobility management entity (MME) 42 as shown in Fig. 4.

The node 50 of the other radio access network 24 is illustrated as comprising resource allocation unit 56; interface 57; and interface 58. When the node 50 of the other radio access network 24 takes the form of a RNC/BSC 38, for example, the interface 57 may be connected to one or more base stations 36 while the interface 58 may be connected toward the core networks 25, 27.

As used herein, "wireless terminal" encompasses mobile stations or user equipment units (UE) such as mobile telephones ("cellular" telephones) and laptops with wireless capability, e.g., mobile termination, and thus can be, for example, portable, pocket, hand-held, computer-included, or car-mounted mobile devices which communicate voice and/or data with radio access network. In some example embodiments a wireless terminal need not be mobile but can instead be fixed.

The wireless terminal 30 comprises, among its other functionalities and units, radio unit 60 and mobility unit 62. Through the radio unit 60 the wireless terminal 30 communicates across a radio interface with eNodeB 32 of LTE radio access network 22 and, e.g., when a connection is re-established thereto, with base station 36 of non-LTE radio access network 24. Moreover, through radio unit 60 the wireless terminal 30 receives a handover command message illustrated as message 64 in Fig. 5. In an example embodiment the radio unit 60 comprises both first logical interface 66 through which wireless terminal 30 communicates with eNodeB 32of LTE radio access network 22 and second logical interface 68 through which wireless terminal 30 communicates (via base station 36) with non-LTE radio access network 24, e.g., a UTRAN/GERAN radio access network.

More particularly, the handover command message 64 is also known as the handover command message with alternative transfer authorization. The handover command message 64 includes, e.g., an indicated cell and an alternative transfer authorization.

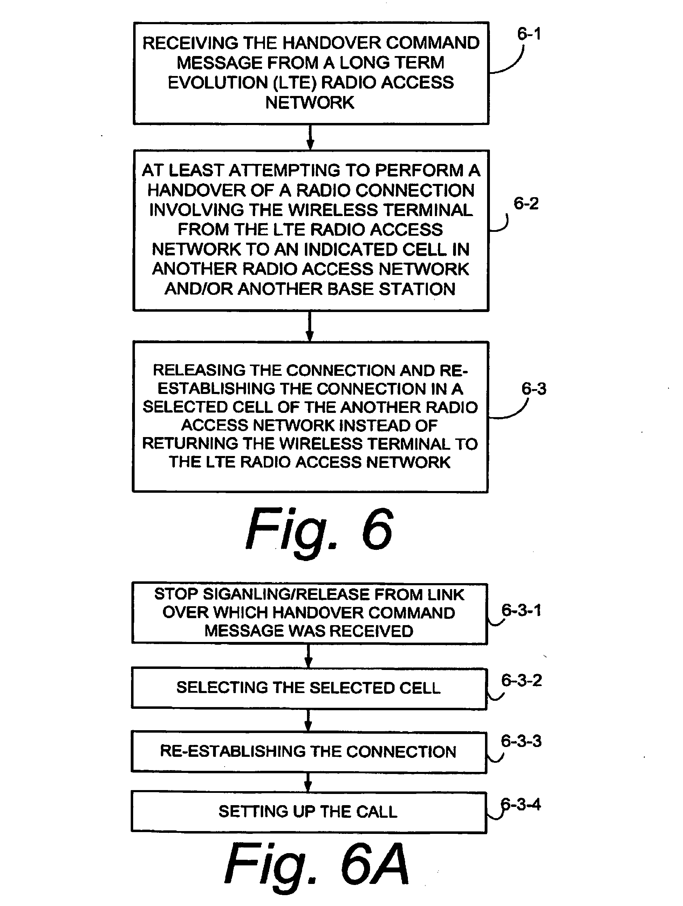

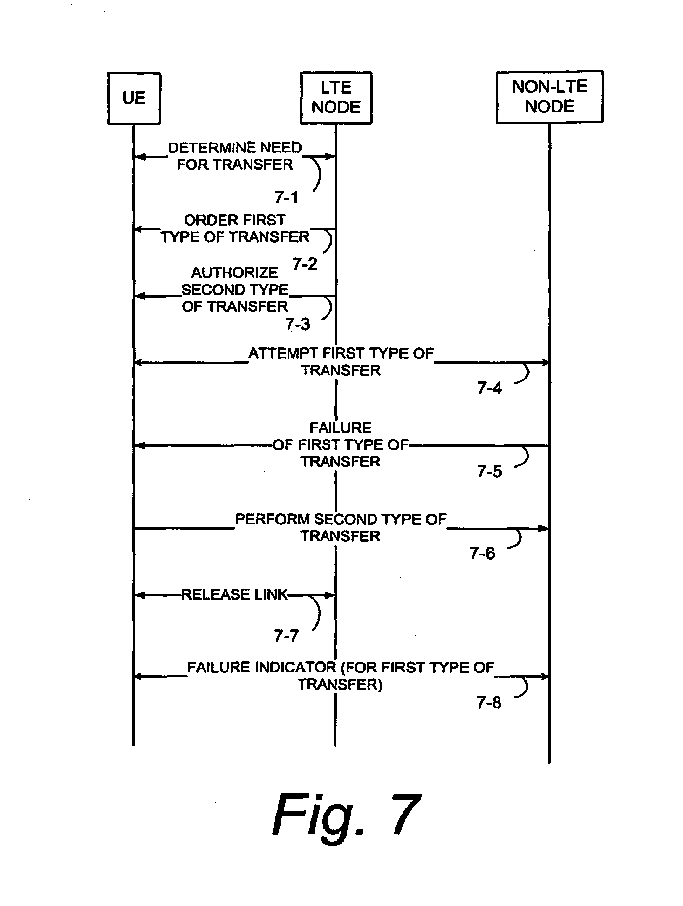

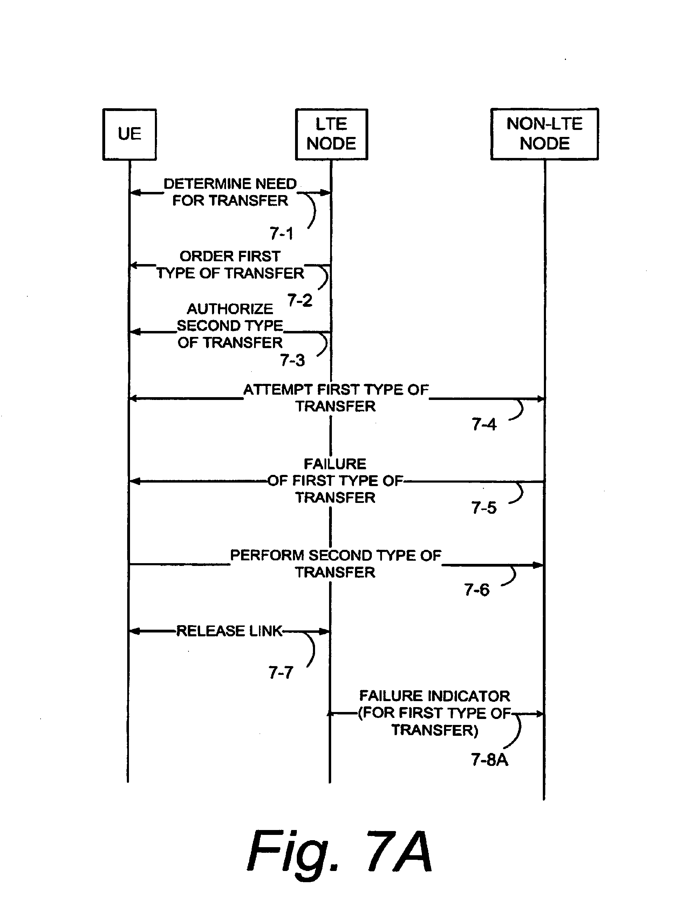

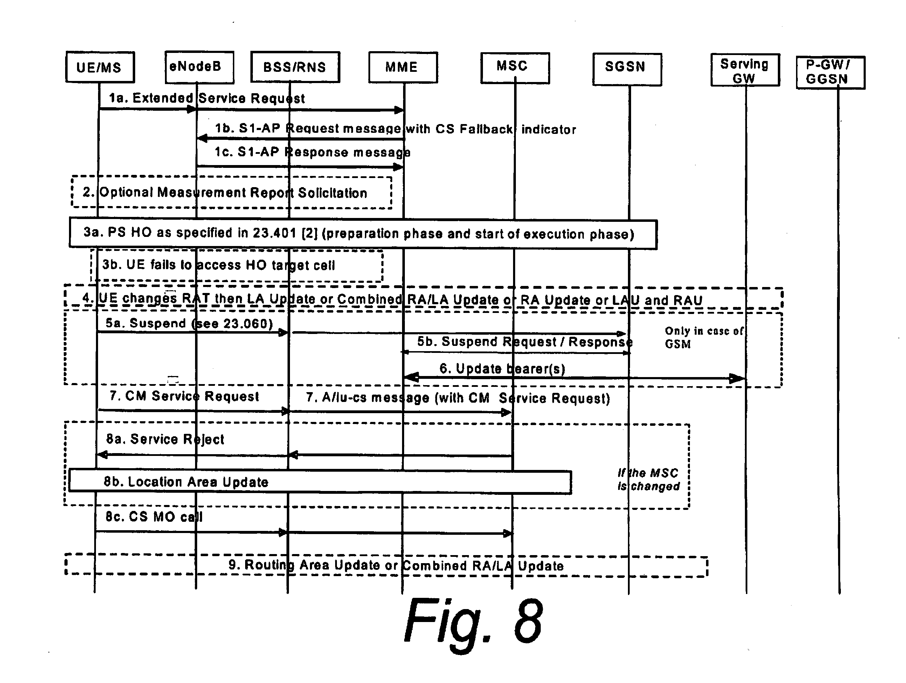

Fig. 6 shows example, representative acts or steps performed in conjunction with an example embodiment and mode of a method of operating a wireless terminal (such as wireless terminal wireless terminal 30) and which authorizes a second try transfer procedure. The method of Fig. 6 which advantageously improves success of transfer of the wireless terminal 30. Fig. 7 shows example overall context of operation in which the example method of Fig. 6 may be implemented. For example, Fig. 7 shows an example embodiment and mode including specific signals and/or messages which may be employed in a second try-authorizing transfer procedure such as that depicted in Fig. 6. Fig. 8 illustrates a more detailed example embodiment and mode of the second try transfer procedure of Fig. 6 in the context of figures such as those of 3GPP standards.

As shown in Fig. 6, in its basic embodiment and mode the method of operating a wireless terminal comprises, as act 6-1, the wireless terminal 30 receiving the handover command message 64 from a Long Term Evolution (LTE) radio access network, e.g., from the LTE radio access network 22 of Fig. 4. As mentioned above, the handover command message 64 comprises an indicated cell and an alternative transfer authorization. Act 6-2 of comprises the wireless terminal, in response to the handover command message 64, at least attempting to perform a handover of a radio connection involving the wireless terminal 30 from the LTE radio access network 22 to the indicated cell in another radio access network, e.g., to non-LTE radio access network 24. If the handover does not succeed within a predetermined time and in response to the alternative transfer authorization, as act 6-3 the method further comprises the wireless terminal releasing the connection and re-establishing the connection in a selected cell of the another radio access network instead of returning the wireless terminal to the LTE radio access network.

Fig. 6A shows more example details or sub-acts of act 6-3 for an example embodiment and mode. Act 6-3-1 comprises the wireless terminal 30 stop signaling over and/or being released from a link to the LTE radio access network over which the handover command message was received. When the wireless terminal receives the handover command (mobiltyFromEUTRACommand) it is already stopped signaling with and is "released" from the LTE radio access network 22 (after being released the wireless terminal 30 has also already tuned its receiver to the new frequency and started the process of preparing to signal for handover of act 6-2, which handover may not succeed for various reasons as previously indicated). Act 6-3-2 comprises the wireless terminal 30 selecting the selected cell when entering the new RAT. Act 6-3-3 comprises re-establishing the connection. For example, the connection may be established using a RRC connection establishment procedure. Act 6-3-4 comprises setting up a call (e.g., voice call) that caused the handover command message on the re-established connection. In view of the acts of Fig. 6A, it is understood that act 6-3 may, in an example embodiment and mode, comprise performance of a circuit switched fallback radio resource control (RRC) connection release with redirection procedure.

The selected cell may be, e.g., the strongest cell as detected by the wireless terminal. The selected cell may or may not be the same cell as the indicated cell specified in the handover command message 64, depending on whether the radio environment has changed since the handover of the radio connection was attempted at act 6-2. The radio environment may change by reason of, e.g., the wireless terminal having moved. Thus, in an example embodiment and mode, when selecting the selected cell the wireless terminal 30 at least considers whether the indicated cell as specified in handover command message 64 can be the selected cell.

In terms of the acts of Fig. 6, mobility unit mobility unit 62 of the wireless terminal 30 is configured, upon receipt of a handover command message, to at least attempt to perform a handover of a connection involving the wireless terminal from the LTE radio access network to the indicated cell in another radio access network. Moreover, if the handover does not succeed within a predetermined time and in response to the alternative transfer authorization, the mobility unit 62 is configured to release the connection and re-establish the connection in the selected cell of the other radio access network, instead of returning the wireless terminal to the LTE radio access network. In some example embodiments, mobility unit 62 is configured to release the connection and re-establish the connection in the selected cell upon detection of the alternative transfer authorization in the handover command message 64. That is, in some example embodiments the mobility unit 62 is authorized to release the connection and re-establish the connection in the selected cell only upon detection of the alternative transfer authorization, e.g., only when the alternative transfer authorization is included in a handover command message 64. As mentioned above, in an example embodiment the releasing of the connection and re-establishing of the connection in the selected cell is accomplished by performance of a radio resource control (RRC) connection release with redirection procedure.

Fig. 7 shows a broader context in which a second try-authorizing transfer procedure such as that of Fig. 6 may be executed or performed. Act 7-1 comprises determining a need for a transfer of the wireless terminal 30 from the LTE radio access network 22 to the non-LTE radio access network 24. Such need for transfer can be determined, for example, when the wireless terminal 30 seeks to access a circuit switched service which is not provided by LTE radio access network 22. Act 7-2 comprises the eNodeB 32 of LTE radio access network 22 ordering the wireless terminal to commence (e.g., at least attempt) a first type of transfer procedure. The first type of transfer procedure may be a handover procedure, such as a circuit switched fallback (CSFB) with packet switched handover, and the order of act 7-2 may take the form of handover command message 64.

Act 7-3 comprises the LTE radio access network 22 also authorizing/instructing the wireless terminal 30 to perform a second type of transfer procedure should the first type of transfer procedure not be successful (e.g., within a predetermined time period). As explained herein, the authorization and/or instruction for the wireless terminal 30 to perform the second type of transfer procedure may be an alternative transfer authorization, and the alternative transfer authorization may be included in the handover command message 64 of act 7-2.

Act 7-4 of Fig. MB shows the wireless terminal 30 attempting the first type of transfer as ordered by act 7-2. However, in the example scenario the first type of transfer fails, as depicted by act 7-5 of Fig. MB. Upon failure of the first type of transfer, as act 7-6 the second type of transfer is performed.

In the example of Fig. 6, the first type of transfer may be a handover and the second type of transfer may be a release of the connection and re-establishing of the connection, as may occur (for example) using a RRC connection release with redirection. In a more specific example implementation, the first type of transfer may be circuit switched fallback (CSFB) with packet switched handover and the second type of transfer may be a circuit switched fallback (CSFB) RRC connection release with redirection. Thus, differing types of transfers do not encompass the same type of transfer (e.g., handover) to a different cell, but rather a different type of transfer procedure (a handover and a RRC connection release with redirection being two example types of transfers).

Fig. 7 shows two further acts which may be implemented in an example embodiment. Act 7-7 comprises the wireless terminal 30 stopping signaling over and/or being released from a link to the LTE radio access network over which the message of act 7-2 (e.g., the handover command message 64) was received. Act 7-8 comprises the wireless terminal 30 providing a failure indication to the other radio access network (non-LTE radio access network 24) upon failure of the first type of transfer (e.g., the handover) and when performing the second type of transfer (e.g., the connection release and connection re-establishment). The failure indication advises the non-LTE radio access network 24 that the handover has previously been attempted, and may request that the base station node of the non-LTE radio access network 24 release resources which had been allocated in conjunction with the first type of transfer (e.g., the handover).

Act 7-6 and act 7-7 need not be performed strictly in the order shown, and indeed may be performed earlier than completion or even inception of the second type of transfer procedure. Moreover, the further acts 7-6 and 7-7 may also be performed under control of mobility unit 62, as in at least some example embodiments the mobility unit 62 is further configured to stop signaling over a link to the LTE radio access network over which the handover command message was received and to indicate to non-LTE radio access network 24 that the handover has previously been attempted. The link to the LTE radio access network over which the handover command message was received is released by the eNodeB 32.

Fig. 7A resembles Fig. 7, but differs in that act 7-8A comprises eNodeB 32 of the LTE radio access network 22 providing a failure indication to the other radio access network (non-LTE radio access network 24) upon failure of the first type of transfer (e.g., the handover) and when the wireless terminal is performing the second type of transfer (e.g., the connection release and connection re-establishment). The failure indication of act 7-8A advises the non-LTE radio access network 24 that the handover has previously been attempted, and may request that the base station node of the non-LTE radio access network 24 release resources which had been allocated in conjunction with the first type of transfer (e.g., the handover). The act 7-8A need not be performed strictly in the order shown, but may be performed earlier if desired.

As stated above, Fig. 8 illustrates a more detailed example embodiment and mode of the second try transfer procedure of Fig. 6 in the context of figures such as those of 3GPP standards. Act 1b of Fig. 8 essentially corresponds to act 6-1, with the handover command message 64 of Fig. 5 essentially corresponding to the S1-AP request message with CS Fallback indicator of but also including the alternative transfer authorization as described herein. Act 3a of Fig. 8 essentially corresponds to act 6-2, e.g., the attempted initiating of the first type of transfer (e.g., handover procedure) as specified in 3GPP TS 23.401. But, as indicated by act 3b of Fig. 8, when the wireless terminal 30 fails to access the handover target cell (e.g., the handover procedure ordered by the handover command message 64 fails), act 4 of Fig. 8 is performed. Act 4 of Fig. 8 corresponds to act 6-3, e.g., the wireless terminal performing a second type of transfer procedure, e.g., the connection release and connection re-establishment in a selected cell (e.g., RRC connection release with redirection procedure), instead of returning the wireless terminal to the LTE radio access network. Other acts involved with or following from the RRC connection release with redirection procedure are illustrated after act 4 of Fig. 8, and to some degree correspond to and are understood from acts 6 *et. seq.* of Fig. 3.

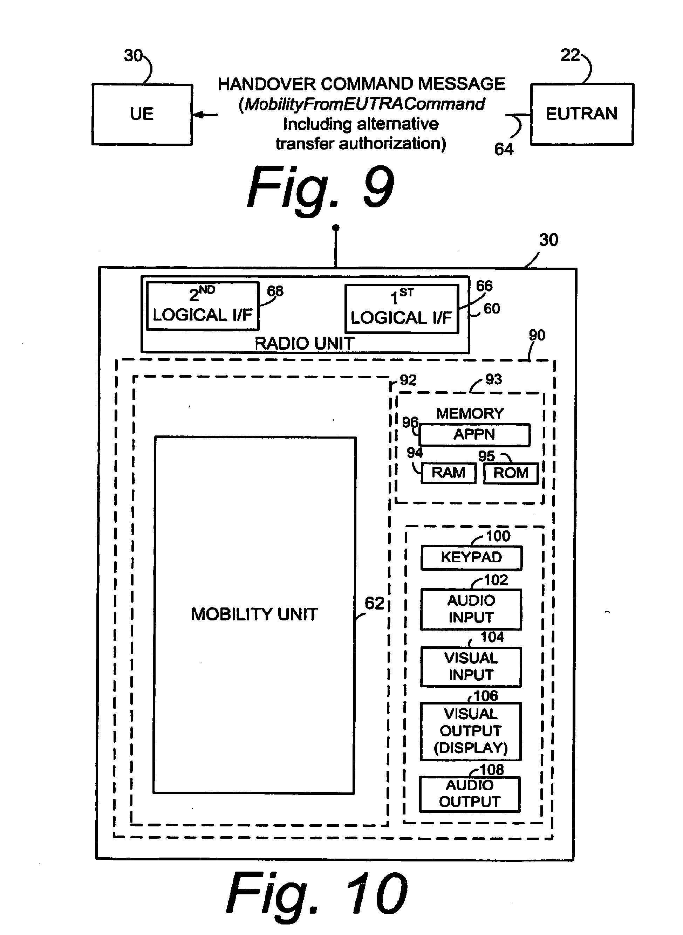

As mentioned before, in an example embodiment the handover command message 64 includes an indicated cell and also includes an alternative transfer authorization. An example handover command message is shown in Fig. 9, in which handover command message 64 takes the form of an enhanced or augmented *MobilityFromEUTRACommand* from the E-UTRAN (from LTE radio access network 22) to the wireless terminal 30. A basic *MobilityFromEUTRACommand* is illustrated in and understood from act 2 of Fig. 1 and section 5.4.3 of 3GPP TS 36.331, Radio Resource Control (RRC), Protocol specification (E-UTRAN). The *MobilityFromEUTRACommand* of Fig. 9 is said to be augmented or enhanced in view of the fact that, according to the technology disclosed herein, the command as handover command message 64 further includes predetermined content that comprises the alternative transfer authorization, e.g., the authorization to use the second transfer procedure (e.g., the RRC connection release with redirection) should the first transfer procedure fail. In an example embodiment and mode the alternative transfer authorization comprises inclusion of predetermined content in the *MobilityFromEUTRACommand* message. In an example implementation, the predetermined content comprises an utra-BCCH-Container information element. The utra-BCCH-Container information element comprises a system information container message, and is defined, e.g., in 3GPP TS 25.331, Radio Resource Control (RRC); Protocol Specification (UTRAN). Currently the utra-BCCH-Container information element is optionally included in the RRC Connection Release Message, specified in section 5.3.8 of 3GPP TS 36.331, Radio Resource Control (RRC), Protocol specification (E-UTRAN), and is optionally used for circuit switched fallback (CSFB) with RWR.

Fig. 10 illustrates more structural detail for certain example machine-implemented embodiments of wireless terminal 30. For example Fig. 10 illustrates that mobility unit 62 of wireless terminal 30 can be provided on a machine platform 90. The machine platform 90 can take any of several forms, such as (for example) a computer implementation platform or a hardware circuit platform. Fig. 10 particularly shows machine platform 90 as being a computer platform wherein logic and functionalities of mobility unit 62, as well as other units and functionalities of wireless terminal 30, are implemented by one or more computer processors or controllers as those terms are herein expansively defined. In such a computer implementation the wireless terminal 30 may comprise, in addition to a processor(s), memory section 93 (which in turn can comprise random access memory 94; read only memory 95; application memory 96 (which stores, e.g., coded instructions which can be executed by the processor to perform acts described herein); and any other memory such as cache memory, for example). In conjunction with the computer platform Fig. 10 also shows wireless terminal 30 as including various interfaces, among which are keypad 100; audio input device (e.g. microphone) 102; visual input device (e.g., camera) 104; visual output device (e.g., display 106); and audio output device (e.g., speaker) 108. Other types of input/output devices can also be connected to or comprise wireless terminal 30.

In the example of Fig. 10 the platform 90 has been illustrated as computer-implemented or computer-based platforms. Another example platform suitable for wireless terminal 30 is that of a hardware circuit, e.g., an application specific integrated circuit (ASIC) wherein circuit elements are structured and operated to perform the various acts described herein.

As mentioned previously, node 50 of the non-LTE radio access network 24 of Fig. 5 comprises interfaces and resource allocation unit 56. The node 50 communicates with the wireless terminal 30 through interface 30, e.g., either directly over radio frequency(ies) in the case of node 50 being a base station or through a radio base station in the case of node 50 being an RNC/BSC 38. The resource allocation unit 56 is configured to set up resources of the non-LTE radio access network 24 for a connection involving the wireless terminal 30 in conjunction with an attempt to perform a first type of transfer (e.g., a handover) of the connection, e.g., from eNodeB 32 to the radio base station 36. The resource allocation unit 56 is further configured to tear down the resources set up for the first type of transfer (e.g., handover) upon receipt of a failure indication which indicates that the first type of transfer has previously been attempted and failed. Such failure indication is understood with reference to act 7-8 of Fig. 7 or act 7-8A of Fig. 7A, for example. The resource allocation unit 56 is further configured to allocate other resources of the non-LTE radio access network 24 in conjunction with re-establishment of the connection involving the wireless terminal in a selected cell of the radio access network 24, e.g., in connection with performance of the radio resource control (RRC) connection release with redirection procedure.

In an example embodiment the resource allocation unit 56 is comprised by electronic circuitry, e.g., a processor or hardware circuit, for example, as understood with reference to the discussion of Fig. 10.

As indicated above, the second type of transfer procedure involves release of the connection with the LTE network 22 and re-establishment of the connection with a selected cell of the non-LTE radio access network 24. As also mentioned above, in an example embodiment and mode this second type of procedure may be a CSFB with RRC connection release with redirection the UTRAN RRC Connection Establishment procedure as specified in section 8.1.3 of 3GPP TS 25.331, Radio Resource Control (RRC); Protocol specification (UTRAN). This RRC Connection Establishment procedure is triggered by the wireless terminal 30 sending a RRC CONNECTION REQUEST message with any establishment cause.

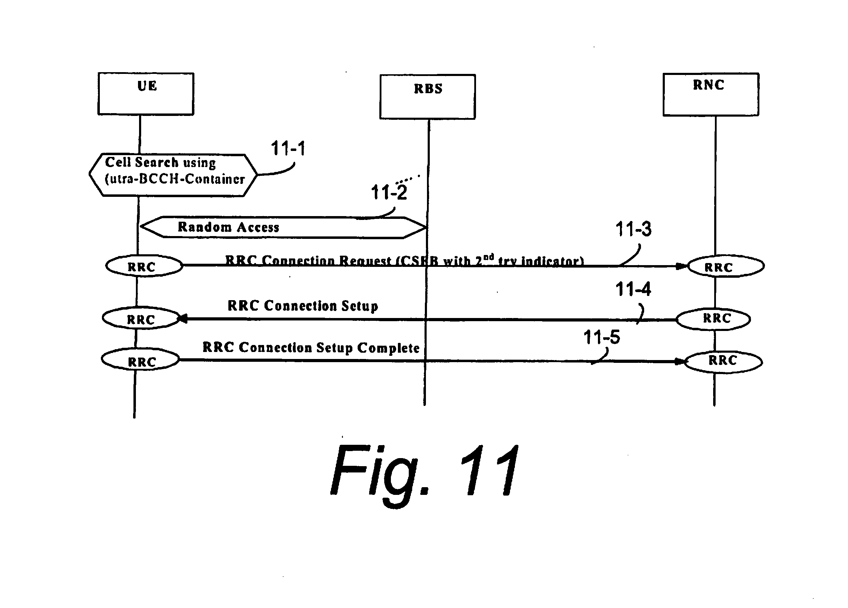

Fig. 11 is a diagrammatic view showing basic acts or steps comprising a method of the wireless terminal 30 accessing the target network, e.g., accessing the base station 36 of non-LTE radio access network 24. Various acts of Fig. 11 involve a radio resource control (RRC) unit or functionality of wireless terminal 30. Act 11-1 comprises the wireless terminal 30 performing a cell search using, e.g., the information provided in the utra-BCCH-Container. Act 11-2 comprises the wireless terminal 30 seeking random access to the base station node 26 of non-LTE radio access network 24. Act 11-3 comprises wireless terminal 30 sending a RRC Connection Request message to the RNC 38 of the non-LTE radio access network 24, the RRC Connection Request message including the alternative transfer authorization. Act 11-4 comprises the RNC 38 returning a RRC Connection Setup message to wireless terminal 30, which is followed by the wireless terminal 30 sending a RRC Connection Setup Complete message to RNC 38 as act 11-5.

In order to inform UTRAN that there are resources prepared for the wireless terminal 30 (due to the failed PSHO) the wireless terminal 30 may indicate this in the RRC Connection Establishment procedure. This will enable the core network to clean up unnecessary allocated resources immediately.

As previously mentioned, the LTE node (eNodeB 32) comprises radio communications interface 54 and handover unit 52. The interface 54 is configured for radio communication with wireless terminal 30. The handover unit 52 is configured to direct that a connection involving the wireless terminal 30 be transferred to another radio access network (e.g., non-LTE radio access network) using the multiple transfer attempt procedure described herein. As already explained, the multiple transfer attempt procedure is configured to cause the wireless terminal: (1) to at least attempt to perform a handover of the connection involving the wireless terminal from the LTE radio access network to the another radio access network; and, if the handover does not succeed within a predetermined time, (2) to release the connection and re-establish the connection with the another radio access network instead of returning the wireless terminal to the LTE radio access network. In an example embodiment the handover unit 52 is comprised by electronic circuitry.

In an example embodiment the handover unit 52 is further configured to select among plural possible types of transfer procedures for transferring the connection to the other radio access network, at least one of the plural possible types of transfer procedures comprising the multiple transfer attempt procedure. Others of the plural possible types of transfer procedures may comprise a circuit switched fallback packet switched handover procedure; and a circuit switched fallback radio resource control (RRC) connection release with redirection procedure.

Thus, as explained above, when a mobile originating or mobile terminating call is indicated to eNodeB 32, there at least are three alternative ways of methods to move the wireless terminal 30 to UTRAN/GERAN. These alternative ways or methods are as follows: (1) packet switched handover (PSHO) in the manner of Fig. 2; (2) RRC connection release with redirection (RWR) in the manner of Fig. 3; or (3) PSHO combined with RWR, the "CSFB with PSHO and Second Try" as described herein. The decision about what transfer mechanism or method to use is thus made within the eNodeB 32 of the LTE radio access network 22, and may particularly be made by handover unit 52.

The handover unit 52 may select between the alternative ways of attempting to move the wireless terminal 30 to UTRAN/GERAN based on various criteria. The criteria or logic by which the selection, decision, or choice of the three alternative ways or methods for moving the wireless terminal to the other radio access network may be dependent upon several factors for reasons, including non-technical reasons, and therefore are not discussed in detail herein. For example, the selection, decision, or choice may result from internal logic or operator configuring the behavior of the LTE eNodeB 32, or be dependent upon availability of certain information which operator may deem necessary for performing one or more of the alternative ways.

In an example embodiment and mode, the third alternative, e.g., PSHO combined with RWR, comprises the eNodeB 32 including release with redirect information as an alternative transfer authorization in the handover command message 64, which may be in the form of a *MobilityFromEUTRACommand* message. Upon receipt of the handover command message 64, the wireless terminal 30 shall first try to perform a first type of transfer (e.g., packet switched handover [PSHO]). Only in case the PSHO does not succeed - within a specified time - the wireless terminal 30 changes strategy and use the supplied second type of transfer procedure (RRC connection release with redirection) to try and establish a connection with the target radio access technology. The wireless terminal 30 will thus not return and try to resume the connection in the LTE radio access network 22.

In accordance with example embodiments and modes of the technology disclosed herein, if the first type of transfer procedure (packet switched handover [PSHO]) fails and the wireless terminal 30 connects instead to the non-LTE radio access network 24 (e.g. UTRAN/GERAN) using the second type of transfer procedure (e.g., the RRC connection release with redirection), the wireless terminal 30 may indicate that it is has tried to perform a PSHO but that has failed. In that way the target RNC/BSC has the option to clean up the pre-reserved resources that were part of the PSHO.

In an example embodiment the handover unit 52 is further configured upon selection of the multiple transfer attempt procedure to send the handover command message 64 to the wireless terminal 30. The handover command message 64 preferably includes the alternative transfer authorization for causing the wireless terminal 30 to participate in the multiple transfer attempt procedure. As previously explained, in an example embodiment the alternative transfer authorization comprises inclusion of predetermined content in a *MobilityFromEUTRACommand* message. In an example embodiment the predetermined content comprises an utra-BCCH-Container information element.

As previously explained with reference to Fig. 7A, in an example embodiment the eNodeB 32, and particularly handover unit 52, is configured to notify the other radio access network (the non-LTE network 24) of employment of the multiple transfer attempt procedure.

The technology disclosed herein thus combines the fast CS voice setup time and the very short PS data interruption time of CS Fallback with PSHO, with the robustness of the CS Fallback with Release with redirect.

Thus, in various ones of its aspects the technology disclosed herein comprises or involves one or more of the following:
- Adding the option to include release with redirect information (RRC connection release with redirection) to the mobilityFromEUTRACommand.
- Changing the behavior of the wireless terminal 30 when the optional parameter mentioned above (e.g., the alternative transfer authorization) is present. The wireless terminal 30 should first behave as a normal PSHO, but if the PSHO is not successful within a specified time and the alternative transfer authorization is provided, the wireless terminal 30 switches behavior and instead behaves as if it had received a RRC connection release with redirection message from the eNodeB 32.
- At a failed PSHO, the wireless terminal 30 indicates to the target RAT, in the initial message to that target RAT, that the wireless terminal 30 has tried to perform a CS Fallback with PSHO, for either a mobile originating or a mobile terminating call, as a cause in the initial message to the target RAT. It is then possible for the target RAT to clean up the reserved resources. The source eNB is still responsible for cleaning up the failed PSHO. This new indication may be transferred back to the core network and source RAT, in response messages for a failed PSHO.

Thus, the technology disclosed herein involves modifications to, e.g., the wireless terminal 30. In case of failure of a PSHO, according to current standard the wireless terminal 30 returns to its previously used LTE resources. But in accordance with the technology disclosed herein, in case of PSHO failure, and if the PSHO was triggered by a CSFB with second try, the wireless terminal 30 shall not return to LTE. Instead, the wireless terminal 30 follows a second transfer procedure e.g., the RRC connection release with redirection procedure.

Using the CS Fallback with PSHO and a backup option of release with redirect combines the fast CS voice setup and the very small packet switched (PS) data interruption time that is characteristics of the CS Fallback with PSHO, with the robustness of the CS Fallback with Release with redirect. This makes it possible for operators to trigger the fast CSFB with PSHO in many more cases without risking degraded speech setup success rates.

When a CS Fallback to UTRAN/GERAN is triggered this is triggered by an originating or terminating speech call. If CS Fallback with PSHO is used there is no advantage with letting the wireless terminal 30 resume resources in the source system in case of a failed HO, since the service wanted by the end-user is not offered in that system.

The technology disclosed herein offers, e.g., a combination of fast call setup time for a CSFB from LTE to UTRAN/GERAN, very short PS outage time, and a robust backup option that serves to solve the mobility mechanism in cases the UE radio connection has a rapidly changing radio environment.

### Abbreviations

- CS: Circuit Switched
- CSFB: Circuit Switched Fallback
- eNB: Enhanced Node B
- EPC: Enhanced Packet Core
- GERAN: GSM EDGE Radio Access Network
- IRAT: Inter Radio Access Technology
- LTE: Long term Evolution
- MME: Mobility Management Entity
- PSHO: Packet Switched Hand Over
- RAT: Radio Access Technology
- RAN: Radio Access Network
- RIM: RAN Information Management
- RWR: RRC Connection Release with Redirection
- SIB: System Information Broadcast
- UARFCN: UTRA Absolute Radio Frequency Channel Number
- UDI: Unified Display Interface
- UE: User Equipment
- UTRAN: UMTS Terrestrial Radio Access Network

### References

[1] 3GPP TS 23.401, General Packed Radio Service (GPRS) enhancements for Evolved Universal Terrestrial Radio Access Network (E-UTRAN) access.
[2] 3GPP TS 23.272, Circuit Switched (CS) fallback in Evolved Packet System (EPS)
[3] 3GPP TS 25.413, UTRAN Iu interface Radio Access Network Application Part (RANAP) signalling
[4] 3GPP TS 25.331, Radio Resource Control (RRC); Protocol specification (UTRAN)
[5] 3GPP TS 36.331, Radio Resource Control (RRC), Protocol specification (E-UTRAN)

## Claims

1. A wireless terminal (30) comprising:
a radio unit (60) through which the wireless terminal (30) selectively communicates across a radio interface (66) with a base station (32) of a Long Term Evolution, LTE, radio access network (22) and with another radio access network (24) and through which the wireless terminal (30) receives a handover command message (64) from the LTE radio access network (22), the another radio access network (24) comprising a radio access technology other than LTE, the wireless terminal (30) being **characterized by** the handover command message (64) including an indicated cell and an alternative transfer authorization, the alternative transfer authorization instructing the wireless terminal (30) to perform a second type of transfer procedure should a first type of transfer procedure not be successful, and the wireless terminal (30) comprises a mobility unit (62) configured, upon receipt of the handover command message (64):
(1) to at least attempt to perform the first type of transfer, wherein the first type of transfer is a handover of a connection involving the wireless terminal (30) from the LTE radio access network (22) to the indicated cell in the another radio access network (24); and, if the handover does not succeed within a predetermined time and in response to the alternative transfer authorization,
(2) to perform the second type of transfer, wherein the second type of transfer is a release of the connection and re-establishment of the connection in a selected cell of the another radio access network (24) instead of returning the wireless terminal (30) to the LTE radio access network (22) and thereby improve success of transfer of the wireless terminal (30).

2. The wireless terminal (30) of claim 1, wherein the alternative transfer authorization comprises inclusion of predetermined content in a *MobilityFromEUTRACommund* message.

3. The wireless terminal (30) of claim 2, wherein the predetermined content comprises an utra-BCCH-Container information element.

4. The wireless terminal (30) of claim 1, wherein the handover comprises a circuit switched fallback with packet switched handover procedure and wherein the mobility unit (62) is configured to re-establish the connection in the selected cell of the another radio access network (24) by performing a circuit switched fallback radio resource control, RRC, connection release with redirection procedure.

5. The wireless terminal (30) of claim 1, wherein the mobility unit (62) is further configured to indicate to the another radio access network (24) that the handover has previously been attempted.

6. The wireless terminal (30) of claim 1, wherein the alternative transfer authorization specifies the indicated cell in the another radio access network (24).

7. A method of improving success of transfer of a wireless terminal (30), the method comprising:
the wireless terminal (30) receiving a handover command message (64) from a Long Term Evolution, LTE, radio access network (22),
the method being **characterized in that**:
the handover command message (64) including an indicated cell and an alternative transfer authorization, the alternative transfer authorization instructing the wireless terminal (30) to perform a second type of transfer procedure should a first type of transfer procedure not be successful;
in response to the handover command message (64), the wireless terminal (30) at least attempting to perform the first type of transfer, wherein the first type of transfer is a handover of a radio connection involving the wireless terminal (30) from the LTE radio access network (22) to the indicated cell in another radio access network (24), the another radio access network (24) comprising a radio access technology other than LTE; and then,
when the handover does not succeed within a predetermined time and in response to the alternative transfer authorization, the wireless terminal (30) performing the second type of transfer, wherein the second type of transfer is releasing the connection and re-establishing the connection in a selected cell of the another radio access network (24) instead of returning the wireless terminal (30) to the LTE radio access network (22).

8. The method of claim 7, further comprising the wireless terminal (30) releasing the connection and re-establishing the connection in the selected cell upon detection of the alternative transfer authorization in the handover command message (64).

9. The method of claim 7, wherein the handover comprises a circuit switched fallback with packet switched handover procedure and the connection is re-established in the selected cell of the another radio access network (24) using a circuit switched fallback radio resource control, RRC, connection release with redirection procedure.

10. The method of claim 7, further comprising the wireless terminal (30) providing a failure indication to the another radio access network (24) upon failure of the handover and when releasing and re-establishing the new connection, the failure indication indicating that the handover has previously been attempted.

11. The method of claim 10, wherein the failure indication requests that the another radio access network (24) release resources of the another radio access network (24) which had been allocated in conjunction with the handover.

12. A node (32) of a Long Term Evolution, LTE, radio access network (22) comprising:
an interface (54) configured for radio communication with a wireless terminal (30);
the node (32) further comprising:
a handover unit (52) configured to send a handover command message to the wireless terminal (30), the handover unit (52) being **characterized by** the handover command message including an indicated cell and an alternative transfer authorization instructing the wireless terminal (30) to perform a multiple transfer attempt procedure, the multiple transfer attempt procedure requiring the wireless terminal (30):
(1) to at least attempt to perform a first type of transfer, wherein the first type of transfer is a handover of a connection involving the wireless terminal (30) from the LTE radio access network (22) to the indicated cell in another radio access network (24), the another radio access network (24) comprising a radio access technology other than LTE; and, if the handover does not succeed within a predetermined time and in response to the alternative transfer authorization,
(2) perform a second type of transfer, wherein the second type of transfer is a release the connection and re-establishment of the connection in a selected cell of the another radio access network (24) instead of returning the wireless terminal (30) to the LTE radio access network (22).

13. The node (32) of claim 12, wherein the handover unit (52) is further configured to select among plural possible types of transfer procedures for transferring the connection to the another radio access network (24), at least one of the plural possible types of transfer procedures comprising the multiple transfer attempt procedure.

14. The node (32) of claim 13, wherein others of the plural possible types of transfer procedures comprise:
a circuit switched fallback packet switched handover procedure; and
a circuit switched fallback radio resource control, RRC, connection release with redirection procedure.

15. The node (32) of claim 13, wherein the handover unit (52) is further configured upon selection of the multiple transfer attempt procedure to send a handover command message (64) which includes an alternative transfer authorization for causing the wireless terminal (30) to participate in the multiple transfer attempt procedure.

16. The node (32) of claim 12, wherein the handover unit (52) is configured to notify the another radio access network (24) of employment of the multiple transfer attempt procedure.

## Patentansprüche

1. Drahtloses Endgerät (30), umfassend:
eine Funkeinheit (60), durch welche das drahtlose Endgerät (30) selektiv über eine Funkschnittstelle (66) mit einer Basisstation (32) eines LTE (Long Term Evolution)-Funkzugangsnetzes (22) und mit einem anderen Funkzugangsnetz (24) kommuniziert, und durch welche das drahtlose Endgerät (30) eine Handover-Befehlsnachricht (64) vom LTE-Funkzugangsnetz (22) empfängt, wobei das andere Funkzugangsnetz (24) eine andere Funkzugangstechnologie als LTE umfasst, das drahtlose Endgerät (30) **dadurch gekennzeichnet ist, dass** die Handover-Befehlsnachricht (64) eine angegebene Zelle und eine Berechtigung zu einem alternativen Transfer umfasst, die Berechtigung zu einem alternativen Transfer das drahtlose Endgerät (30) anweist, einen zweiten Typ von Transferprozedur durchzuführen, sollte ein erster Typ von Transferprozedur nicht erfolgreich sein, und das drahtlose Endgerät (30) eine Mobilitätseinheit (62) umfasst, die so konfiguriert ist, dass sie bei Empfang der Handover-Befehlsnachricht (64):
(1) wenigstens versucht, den ersten Typ von Transfer durchzuführen, wobei der erste Typ von Transfer ein Handover einer Verbindung, an der das drahtlose Endgerät (30) beteiligt ist, vom LTE-Funkzugangsnetz (22) zur angegebenen Zelle im anderen Funkzugangsnetz (24) ist; und, wenn das Handover nicht innerhalb einer vorbestimmten Zeit gelingt, und in Reaktion auf die Berechtigung zu einem alternativen Transfer
(2) den zweiten Typ von Transfer durchführt, wobei der zweite Typ von Transfer eine Freigabe der Verbindung und Wiederherstellung der Verbindung in einer ausgewählten Zelle des anderen Funkzugangsnetzes (24) anstelle eines Zurückkehrens des drahtlosen Endgeräts (30) zum LTE-Funkzugangsnetz (22) ist und daher den Erfolg des Transfers des drahtlosen Endgeräts (30) verbessert.

2. Drahtloses Endgerät (30) nach Anspruch 1, wobei die Berechtigung zu einem alternativen Transfer eine Einbeziehung von bestimmtem Inhalt in eine *MobilityFromEUTRACommand-Nachricht* umfasst.

3. Drahtloses Endgerät (30) nach Anspruch 2, wobei der vorbestimmte Inhalt ein utra-BCCH-Container-Informationselement umfasst.

4. Drahtloses Endgerät (30) nach Anspruch 1, wobei das Handover einen leitungsvermittelten Fallback mit paketermittelter Handover-Prozedur umfasst, und wobei die Mobilitätseinheit (62) so konfiguriert ist, das sie die Verbindung in der ausgewählten Zelle des anderen Funkzugangsnetzes (24) durch Durchführen einer Freigabe einer Funkressourcensteuerungs, RRC,-Verbindung bei leitungsvermitteltem Fallback mit Umleitungsprozedur wiederherstellt.

5. Drahtloses Endgerät (30) nach Anspruch 1, wobei die Mobilitätseinheit (62) ferner so konfiguriert ist, dass sie dem anderen Funkzugangsnetz (24) anzeigt, dass das Handover vorher versucht wurde.

6. Drahtloses Endgerät (30) nach Anspruch 1, wobei die Berechtigung zu einem alternativen Transfer die angegebene Zelle im anderen Funkzugangsnetz (24) spezifiziert.

7. Verfahren zur Verbesserung des Erfolgs eines Transfers eines drahtlosen Endgeräts (30), wobei das Verfahren umfasst, dass:
das drahtlose Endgerät (30) eine Handover-Befehlsnachricht (64) von einem LTE (Long Term Evolution)-Funkzugangsnetz (22) empfängt,
wobei das Verfahren ferner **dadurch gekennzeichnet ist, dass**:
die Handover-Befehlsnachricht (64) eine angegebene Zelle und eine Berechtigung zu einem alternativen Transfer umfasst, wobei die Berechtigung zu einem alternativen Transfer das drahtlose Endgerät (30) anweist, einen zweiten Typ von Transferprozedur durchzuführen, sollte ein erster Typ von Transferprozedur nicht erfolgreich sein;
das drahtlose Endgerät (30) in Reaktion auf die Handover-Befehlsnachricht (64) wenigstens versucht, den ersten Typ von Transfer durchzuführen, wobei der erste Typ von Transfer ein Handover einer Funkverbindung, an der das drahtlose Endgerät (30) beteiligt ist, vom LTE-Funkzugangsnetz (22) zur angegebenen Zelle im anderen Funkzugangsnetz (24) ist, das andere Funkzugangsnetz (24) eine andere Funkzugangstechnologie als LTE umfasst; und dann,
wenn das Handover nicht innerhalb einer vorbestimmten Zeit gelingt, und in Reaktion auf die Berechtigung zu einem alternativen Transfer das drahtlose Endgerät (30) den zweiten Typ von Transfer durchführt, wobei der zweite Typ von Transfer eine Freigabe der Verbindung und Wiederherstellung der Verbindung in einer ausgewählten Zelle des anderen Funkzugangsnetzes (24) anstelle eines Zurückkehrens des drahtlosen Endgeräts (30) zum LTE-Funkzugangsnetz (22) ist.

8. Verfahren nach Anspruch 7, ferner umfassend, dass das drahtlose Endgerät (30) bei Erkennung der Berechtigung zu einem alternativen Transfer in der Handover-Befehlsnachricht (64) die Verbindung in der ausgewählten Zelle freigibt und die Verbindung wiederherstellt.

9. Verfahren nach Anspruch 7, wobei das Handover einen leitungsvermittelten Fallback mit paketermittelter Handover-Prozedur umfasst, und die Verbindung in der ausgewählten Zelle des anderen Funkzugangsnetzes (24) unter Verwendung einer Freigabe einer Funkressourcensteuerungs, RRC,-Verbindung bei leitungsvermitteltem Fallback mit Umleitungsprozedur wiederhergestellt wird.

10. Verfahren nach Anspruch 7, ferner umfassend, dass das drahtlose Endgerät (30) bei Fehlschlag des Handovers eine Fehlschlaganzeige an das andere Funkzugangsnetz (24) übermittelt, und bei Freigabe und Wiederherstellung der neuen Verbindung die Fehlschlaganzeige anzeigt, dass das Handover vorher versucht wurde.

11. Verfahren nach Anspruch 10, wobei die Fehlschlaganzeige fordert, dass das andere Funkzugangsnetz (24) Ressourcen des anderen Funkzugangsnetzes (24) freigibt, die in Verbindung mit dem Handover zugewiesen wurden.

12. Knoten (32) eines LTE (Long Term Evolution)-Funkzugangsnetzes (22), umfassend:
eine Schnittstelle (54), die zur Funkkommunikation mit einem drahtlosen Endgerät (30) konfiguriert ist;
wobei der Knoten (32) ferner umfasst:
eine Handover-Einheit (52), die so konfiguriert ist, dass sie eine Handover-Befehlsnachricht an das drahtlose Endgerät (30) sendet, wobei die Handover-Einheit (52) **dadurch gekennzeichnet ist, dass** die Handover-Befehlsnachricht eine angegebene Zelle und eine Berechtigung zu einem alternativen Transfer umfasst, die das drahtlose Endgerät (30) anweist, eine Mehrfachtransferversuchsprozedur durchzuführen, wobei die Mehrfachtransferversuchsprozedur erfordert, dass das drahtlose Endgerät (30):
(1) wenigstens versucht, einen ersten Typ von Transfer durchzuführen, wobei der erste Typ von Transfer ein Handover einer Verbindung, an der das drahtlose Endgerät (30) beteiligt ist, vom LTE-Funkzugangsnetz (22) zur angegebenen Zelle in einem anderen Funkzugangsnetz (24) ist, wobei das andere Funkzugangsnetz (24) eine andere Funkzugangstechnologie als LTE umfasst; und, wenn das Handover nicht innerhalb einer vorbestimmten Zeit gelingt, und in Reaktion auf die Berechtigung zu einem alternativen Transfer
(2) einen zweiten Typ von Transfer durchführt, wobei der zweite Typ von Transfer eine Freigabe der Verbindung und Wiederherstellung der Verbindung in einer ausgewählten Zelle des anderen Funkzugangsnetzes (24) anstelle eines Zurückkehrens des drahtlosen Endgeräts (30) zum LTE-Funkzugangsnetz (22) ist.

13. Knoten (32) nach Anspruch 12, wobei die Handover-Einheit (52) ferner so konfiguriert ist, dass sie unter mehreren möglichen Typen von Transferprozeduren zum Transferieren der Verbindung zu einem anderen Funkzugangsnetz (24) mindestens einen der mehreren möglichen Typen von Transferprozeduren auswählt, der die Mehrfachtransferversuchsprozedur umfasst.

14. Knoten (32) nach Anspruch 13, wobei andere der mehreren möglichen Typen von Transferprozeduren umfassen:
eine paketvermittelte Handover-Prozedur bei leitungsvermitteltem Fallback; und
eine Freigabe einer Funkressourcensteuerungs, RRC,-Verbindung bei leitungsvermitteltem Fallback mit Umleitungsprozedur.

15. Knoten (32) nach Anspruch 13, wobei die Handover-Einheit (52) ferner so konfiguriert ist, dass sie bei Auswahl der Mehrfachtransferversuchsprozedur eine Handover-Befehlsnachricht (64) sendet, welche eine Berechtigung zu einem alternativen Transfer zum Veranlassen des drahtlosen Endgeräts (30) umfasst, an der Mehrfachtransferversuchsprozedur teilzunehmen.

16. Knoten (32) nach Anspruch 12, wobei die Handover-Einheit (52) so konfiguriert ist, dass sie das andere Funkzugangsnetz (24) vom Einsatz der Mehrfachtransferversuchsprozedur benachrichtigt.

## Revendications

1. Terminal sans fil (30) comprenant :
une unité radio (60) via laquelle le terminal sans fil (30) communique sélectivement au travers d'une interface radio (66) avec une station de base (32) d'un réseau d'accès radio (22) à évolution à long terme et avec un autre réseau d'accès radio (24) et via laquelle le terminal sans fil (30) reçoit un message de commande de transfert intercellulaire (64) provenant du réseau d'accès radio LTE (22), l'autre réseau d'accès radio (24) comprenant une technologie d'accès radio autre que LTE, le terminal sans fil (30) étant **caractérisé par** le message de commande de transfert intercellulaire (64) incluant une cellule indiquée et une autorisation de transfert alternative, l'autorisation de transfert alternative donnant instruction au terminal sans fil (30) d'effectuer un second type de procédure de transfert si un premier type de procédure de transfert avait échoué, et le terminal sans fil (30) comprend une unité de mobilité (62) étant configurée pour, à la réception d'un message de commande de transfert intercellulaire (64) :
(1) tenter au moins d'effectuer le premier type de transfert, dans lequel le premier type de transfert est un transfert intercellulaire d'une connexion impliquant le terminal sans fil (30) du réseau d'accès radio LTE (22) vers la cellule indiquée dans l'autre réseau d'accès radio (24) ; et, si le transfert intercellulaire ne réussit pas en l'espace d'une durée prédéterminée et en réponse à l'autorisation de transfert alternative,
(2) effectuer le second type de transfert, dans lequel le second type de transfert est une libération de connexion et le rétablissement de la connexion dans une cellule sélectionnée de l'autre réseau d'accès radio (24) au lieu de renvoyer le terminal sans fil (30) au réseau d'accès radio LTE (22) et améliorer ainsi la réussite du transfert du terminal sans fil (30).

2. Terminal sans fil (30) selon la revendication 1, dans lequel l'autorisation de transfert alternative comprend l'inclusion d'un contenu prédéterminé dans un message *MobilityFromEUTRACommand.*

3. Terminal sans fil (30) selon la revendication 2, dans lequel le contenu prédéterminé comprend un élément d'information de conteneur BCCH-utra.

4. Terminal sans fil (30) selon la revendication 1, dans lequel le transfert intercellulaire comprend une procédure de repli à commutation de circuits avec transfert intercellulaire à commutation de paquets et dans lequel l'unité de mobilité (62) est configurée pour rétablir la connexion dans la cellule sélectionnée de l'autre réseau d'accès radio (24) en effectuant un procédure de libération de connexion par commande de ressource radio, RRC, à repli à commutation de circuits avec redirection.

5. Terminal sans fil (30) selon la revendication 1, dans lequel l'unité de mobilité (62) est en outre configurée pour indiquer à 'autre réseau d'accès radio (24) que le transfert intercellulaire a été précédemment tenté.

6. Terminal sans fil (30) selon la revendication 1, dans lequel l'autorisation de transfert alternative spécifie la cellule indiquée dans l'autre réseau d'accès radio (24).

7. Procédé d'amélioration de la réussite de transfert d'un terminal sans fil (30), le procédé comprenant de :
recevoir par le terminal sans fil (30) un message de commande de transfert intercellulaire (64) provenant d'un réseau d'accès radio (22) à évolution à long terme, LTE ;
le procédé étant **caractérisé en ce que** :
le message de commande de transfert intercellulaire (64) inclut une cellule indiquée et une autorisation de transfert alternative, l'autorisation de transfert alternative donnant instruction au terminal sans fil (30) d'effectuer un second type de procédure de transfert si un premier type de procédure de transfert avait échoué ;
en réponse au message de commande de transfert intercellulaire (64), le terminal sans fil (30) tente au moins d'effectuer le premier type de transfert, dans lequel le premier type de transfert est un transfert intercellulaire d'une connexion radio impliquant le terminal sans fil (30) du réseau d'accès radio LTE (22) à la cellule indiquée dans un autre réseau d'accès radio (24), l'autre réseau d'accès radio (24) comprenant une technologie d'accès radio autre que LTE ; et ensuite
quand le transfert intercellulaire ne réussit pas en l'espace d'une durée prédéterminée et en réponse à l'autorisation de transfert alternative, le terminal sans fil (30) effectue le second type de transfert, dans lequel le second type de transfert est une libération de connexion et le rétablissement de la connexion dans une cellule sélectionnée de l'autre réseau d'accès radio (24) au lieu de renvoyer le terminal sans fil (30) au réseau d'accès radio LTE (22).

8. Procédé selon la revendication 7, comprenant en outre la libération et le rétablissement de la connexion par le terminal sans fil (30) dans la cellule sélectionnée lors de la détection de l'autorisation de transfert alternative dans le message de commande de transfert intercellulaire (64).

9. Procédé selon la revendication 7, dans lequel le transfert intercellulaire comprend un repli à commutation de circuits avec procédure de transfert intercellulaire à commutation de paquets et la connexion est rétablir dans la cellule sélectionnée de l'autre réseau d'accès radio (24) en utilisant une libération de connexion de commande de ressource radio, RRC, à repli à commutation de circuits avec procédure de redirection.

10. Procédé selon la revendication 7, comprenant en outre la fourniture par le terminal sans fil (30) d'une indication de panne à l'autre réseau d'accès radio (24) lors d'une panne du transfert intercellulaire et lors de la libération et du rétablissement de la nouvelle connexion, l'indication de panne indiquant que le transfert intercellulaire a été précédemment tenté.

11. Procédé selon la revendication 10, dans lequel l'indication de panne demande que l'autre réseau d'accès radio (24) libère les ressources de l'autre réseau d'accès radio (24) qui ont été allouées en liaison avec le transfert intercellulaire.

12. Noeud (32) d'un réseau d'accès radio (22) à évolution à long terme, LTE, comprenant :
une interface (54) configurée pour une communication radio avec un terminal sans fil (30) ;
le noeud (32) comprenant en outre :
une unité de transfert intercellulaire (52) configurée pour envoyer un message de commande de transfert intercellulaire au terminal sans fil (30), l'unité de transfert intercellulaire (52) étant **caractérisée par** le message de commande de transfert intercellulaire incluant une cellule indiquée et une autorisation de transfert alternative donnant instruction au terminal sans fil (30) d'effectuer une procédure de tentative de transfert multiples, la procédure de tentative de transfert multiple nécessitant que le terminal sans fil (30) :
(1) tente au moins d'effectuer un premier type de transfert, dans lequel le premier type de transfert est un transfert intercellulaire d'une connexion impliquant le terminal sans fil (30) du réseau d'accès radio LTE (22) vers la cellule indiquée dans un autre réseau d'accès radio (24), l'autre réseau d'accès radio (24) comprenant une technologie d'accès radio autre que LTE ; et si le transfert intercellulaire ne réussit pas en l'espace d'une durée prédéterminée et en réponse à l'autorisation de transfert alternative,
(2) effectue un second type de transfert, dans lequel le second type de transfert est une libération de la connexion et un rétablissement de la connexion dans une cellule sélectionnée de l'autre réseau d'accès radio (24) au lieu de renvoyer le terminal sans fil (30) au réseau d'accès radio LTE (22).

13. Noeud (32) selon la revendication 12, dans lequel l'unité de transfert intercellulaire (52) est en outre configurée pour sélectionner parmi plusieurs types possibles de procédures de transfert pour transférer la connexion à l'autre réseau d'accès radio (24), au moins un des plusieurs types possibles de procédures de transfert comprenant la procédure de tentative de transfert multiples.

14. Noeud (32) selon la revendication 13, dans lequel d'autres des plusieurs types possibles de procédures de transfert comprennent :
une procédure de transfert intercellulaire à commutation de paquets à repli à commutation de circuits ; et
une libération de connexion de commande de ressource radio, RRC, à repli à commutation de circuits avec procédure de redirection.

15. Noeud (32) selon la revendication 13, dans lequel l'unité de transfert intercellulaire (52) est en outre configurée lors de la sélection de la procédure de tentative de transfert multiple d'envoyer un message de commande de transfert intercellulaire (64) qui inclut une autorisation de transfert alternative pour amener le terminal sans fil (30) à participer à la procédure de tentative de transfert multiple.

16. Noeud (32) selon la revendication 12, dans lequel l'unité de transfert intercellulaire (52) est configurée pour notifier à l'autre réseau d'accès radio (24) l'emploi de la procédure de tentative de transfert multiple.
